# EUROPEAN PATENT SPECIFICATION

(11) **EP 2 777 914 B1**
(45) Date of publication and mention of the grant of the patent: **21.06.2017**
(21) Application number: 12848662.8
(22) Date of filing: 01.11.2012
(51) Int. Cl.: B29C 65/56, B29C 65/78, B29D 30/38, B29K 21/00, B29L 30/00

(54) **BUTT JOINT DEVICE FOR SHEET-FORM MEMBERS, AND METHOD OF USING SAME**
STOSSVERBINDUNGSVORRICHTUNG FÜR BLATTFÖRMIGE ELEMENTE UND VERWENDUNGSVERFAHREN DAFÜR
DISPOSITIF D'ASSEMBLAGE BOUT À BOUT DESTINÉ À DES ÉLÉMENTS SOUS FORME DE FEUILLE ET SON PROCÉDÉ D'UTILISATION

(30) Priority: 08.11.2011 JP 2011244875
(43) Date of publication of application: 17.09.2014
(73) Proprietor: Bridgestone Corporation, Tokyo 104-8340 (JP)
(72) Inventor: ITO, Kanau, Kodaira-shi Tokyo 187-8531 (JP)
(74) Representative: Oxley, Robin John George
(86) International application number: PCT/JP2012/007020
(87) International publication number: WO 2013/069235

(56) References cited:
- EP-A1- 1 862 296
- WO-A1-2007/007405
- JP-A- S6 431 628
- JP-A- S6 431 628
- JP-A- H11 115 053
- JP-A- 2003 305 782
- JP-A- 2004 268 457
- US-A- 4 478 672
- US-A- 4 867 823
- US-A- 5 221 409

## Description

### TECHNICAL FIELD

The present invention relates to an apparatus for butt joining sheet members, the apparatus butt joining edge faces of two sheet members with each other, the sheet members being made, for example, by coating a plurality of cords with unvulcanized rubber. The present invention also relates to a method for using the apparatus. In particular, the present invention proposes a technique for certainly and easily butt joining two sheet members with each other.

### RELATED ART

Carcass ply material used in tire manufacturing is made through, for example, a process in which cords such as steel cords extending in a longitudinal direction is coated with unvulcanized rubber by calendaring or the like to form a belt member; the belt member is cut at a predetermined angle, depending on the size and type of a tire to be manufactured, with a bias cutter or the like to form a plurality of sheet members having predetermined widths; then, opposed edge faces of the sheet members are butt joined with each other, for example, by an apparatus for joining edge faces disclosed in Patent Literature 1.

Patent Literature 1 discloses an apparatus "having: a first conveyer including a plurality first of belts, which extend in a longitudinal direction thereof, the first conveyer being capable of extending and retracting in a longitudinal direction of belt-shaped members; a second conveyer arranged ahead of the first conveyer including a plurality of second belts arranged in alternation relation with respect to the first belts and arranged apart from each other in a width direction of the belt-shaped members, the second belts extending in a longitudinal direction thereof, the second conveyer being capable of extending and retracting in the longitudinal direction of the belt-shaped members, front ends of the first belts and rear ends of the second belts interdigitate each other when both of the first conveyer and the second conveyer extend and are brought closest to each other; a plurality of positioning pins being arranged at the boundary between the first conveyer and the second conveyer and extending in a vertical direction, the positioning pins being capable of elevating, the positioning pins abutting against a front edge of the belt-shaped member on the first conveyer and a rear edge of the belt-shaped member on the second conveyer to position the belt-shaped members when the positioning pins rise and protrude upwardly from the first conveyer and the second conveyer; a upper joint claw arranged above the positioning pins and being capable of elevating; a lower joint claw arranged under the upper joint claw and being capable of elevating, the lower joint claw joining the front edge of the belt-shaped member on the first conveyer and the rear edge of the belt-shaped member on the second conveyer in cooperation with the upper joint claw which lowers when the lower joint claw rises." The apparatus serially and continuously joints edge faces of the plurality of sheet members conveyed on the conveyers.

With regard to the operation of the above-mentioned edge face-joining apparatus to join the edge faces of the sheet members, when parts of the sheet members not being joined as desired are corrected or when spare sheet members are used during the subsequent process, an operator manually overlaps and press bonds each edge of the two belt members to be joined so as to bring the sheet members into an overlap joint.

### CITATION LIST

### Patent Literature

### PTL 1: JPH06-198745A

Reference is also made to US 5221409, JP 64-31628, US 4478672, US 4867823 and EP 1862296 that disclose apparatus and methods for butt joining sheet members.

### SUMMARY OF INVENTION

When an operator manually overlaps and joins the sheet members as stated above, a high skill is required for the operator. In addition, a tire manufactured with a sheet member being overlapped and joined may have a non-uniform density in a tire circumferential direction, which may deteriorate the uniformity of the tire. Furthermore, a defect due to inclusion of air, or poor appearance may be generated at a part being overlapped and joined.

On the other hand, when edge faces of sheet members are butt joined with each other by hand, the joint is less robust than that formed with the above apparatus. As a result, the joined faces are likely to separate during the subsequent processes. Thus, it is inevitable, when edges of sheet members are joined with each other, to overlap and joint the edges in order to secure desired joint strength of the joint portions of the sheet members.

The present invention aims to solve the problems that the conventional techniques have, and an object of the present invention is to provide an apparatus for butt joining sheet members and a method for using the apparatus, the apparatus being capable of certainly and easily butt joining opposed edge faces of the two sheet members with each other.

An apparatus for butt joining sheet members according to the present invention has: a supporting plate; a movable arm spaced from the supporting plate by a predetermined distance and being capable of moving toward or away from the supporting plate; and a pair of opposed joint units arranged at the supporting plate and the movable arm, respectively, each of the pair of joint units being provided with two gear wheels and two drawing rolls aligned in a direction in which the movable arm extends, the gear wheel having a circular truncated cone shape and at least one groove extending in a circumferential direction on the outer circumferential surface of the gear wheel, the two gear wheels being capable of rotating synchronously, the drawing roll having a cylindrical shape and at least one groove extending in a circumferential direction on the outer circumferential surface of the drawing roll, the two drawing rolls being capable of rotating synchronously, the supporting plate and the movable arm being moved toward one side in a longitudinal direction of the movable arm with respective edges of two sheet members to be joined being sandwiched between the pair of joint units to bring the edges closer together and butt join edge faces of the sheet members, wherein the drawing rolls of the supporting plate and the movable arm are arranged ahead in an advancing direction of the supporting plate and the movable arm, and the gear wheels of the supporting plate and the movable arm are arranged behind in the advancing direction.

In addition, a method for using an apparatus for butt joining sheet members according to the present invention butt joins opposed edge faces of two sheet members with each other with any of the above apparatuses for butt joining, and the method includes the steps of: moving the supporting plate and the movable arm toward one side in a longitudinal direction of the movable arm with respective edges of the two sheet members being sandwiched between the pair of joint units to rotationally displace each drawing roll and each gear wheel of the joint units on the edges of the sheet members; bringing the edges of the sheet members closer together by means of the drawing rolls arranged ahead in an advancing direction of the supporting plate and the movable arm; and press bonding the edge faces of the sheet members with each other with the gear wheels arranged behind in the advancing directions.

In the apparatus for butt joining sheet members according to the present invention, the supporting plate and the movable arm are moved along the edge faces of the sheet members toward one side in the longitudinal direction of the movable arm with respective edges of the two sheet members being sandwiched between the pair of joint units, so that the two drawing rolls which are rotationally displaced on the edges of the sheet members on the upper face sides thereof and the two drawing rolls which are rotationally displaced on the edges of the sheet members on the lower face sides thereof bring the edges of the two sheet members closer together. Then, the two gear wheels which are rotationally displaced on the edges of the sheet members on the upper face sides thereof and the two gear wheels which are rotationally displaced on the edges of the sheet members on the lower face sides thereof function to firmly press bond the edge faces of the sheet members with each other. Accordingly, the two sheet members can be easily and certainly and butt joined with each other.

In addition, the apparatus for butt joining is applicable for rejoining parts of the sheet members which are not joined as desired with the above apparatus for joining edge faces or for an operation of butt joining the spare sheet members during the subsequent processes. Accordingly, the apparatus for butt joining can avoid deterioration of the uniformity of the manufactured tire and inclusion of air caused by an overlap joint of the sheet members.

Furthermore, in the method for using the apparatus for butt joining sheet members according to the present invention, the drawing rolls arranged ahead in the advancing direction of the supporting plate and the movable arm bring the edge of the sheet members closer together, and the gear wheels arranged behind in the advancing direction firmly press bond the edge faces of the sheet members with each other. Accordingly, the sheet members can be easily and certainly butt joined in the same way as stated above.

### BRIEF DESCRIPTION OF DRAWINGS

The present invention will be further described below with reference to the accompanying drawings, in which:
Fig. 1 is a side view of an apparatus for butt joining sheet members in an embodiment of the present invention.
Fig. 2 is a view of two drawing rolls of the apparatus for butt joining in Fig. 1 viewed in a direction of the line II-II in Fig. 1, shown in a state where the drawing rolls engage with each other.
Fig. 3 is a partial enlarged front view of gear wheels of the apparatus for butt joining in Fig. 1, shown in a state where the gear wheels sandwich sheet members to be joined.
Fig. 4 is a perspective view of the apparatus for butt joining in Fig. 1, shown in a state where the movable arm are spaced from the supporting plate.

### DESCRIPTION OF EMBODIMENTS

With reference to the drawings, an embodiment of the present invention is discussed below.

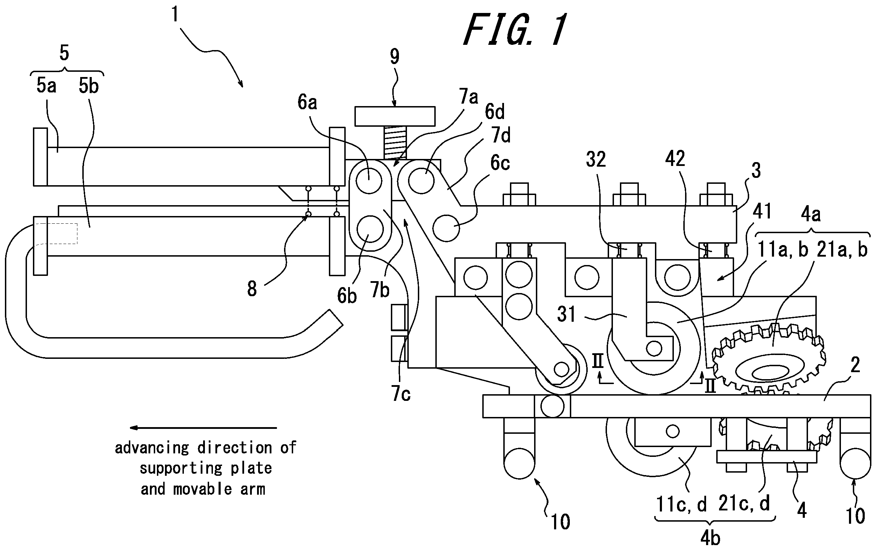

Fig. 1 illustrates an example of an apparatus 1 for butt joining respective edges of two sheet members with each other through manual manipulation by an operator. The apparatus 1 has: a flat supporting plate 2 on which sheet members (not illustrated) are placed on the upper face side in Fig. 1; a movable arm 3 capable of moving toward or away from the supporting plate 2 and arranged above the supporting plate 2 with a predetermined space therebetween, the movable arm 3, in this embodiment, extending in parallel with the supporting plate 2 in a lateral direction in Fig. 1; and a pair of opposed top and bottom joint units 4a, 4b in Fig. 1 arranged at the supporting plate 2 and the movable arm 3, respectively.

In the apparatus 1, the supporting plate 2 and the movable arm 3 are moved in a direction indicated by an arrow in Fig. 1 while respective edges of the two sheet members are sandwiched between the pair of joint units 4a, 4b to butt join edge faces of the sheet members.

In the embodiment, two drawing rolls 11a, 11b are lined in a direction perpendicular to the paper surface of Fig. 1 and are rotatably attached to the movable arm 3, for example, via a connecting member 31. Similarly, two gear wheels 21a, 21b are rotatably attached to the movable arm 3 via a connecting member 41 at positions adjacent to the drawing rolls 11a, 11b in a direction in which the movable arm 3 extends. The two drawing rolls 11a, 11b and the two gear wheels 21a, 21b constitute a joint unit 4a on the movable arm side.

In addition, in the embodiment, two drawing rolls 11c, 11d are lined in the direction perpendicular to the paper surface of Fig. 1 and are rotatably installed in an open hole formed in the supporting place 2. Similarly, two gear wheels 21c, 21 d are lined and are rotatably installed at positions adjacent to the drawing rolls 11c, 11d in the open hole. The two drawing rolls 11c, 11d and the two gear wheels 21c, 21 d constitute a joint unit 4b on the side of the supporting plate 2.

As illustrated in Fig. 1, in the pair of joint units 4a, 4b, the two drawing rolls 11a, 11b on the movable arm side face the two drawing rolls 11c, 11d on the supporting plate side in a vertical direction in Fig. 1. The two gear wheels 21a, 21b on the movable arm side face the two gear wheels 21c, 21d on the supporting plate side in the vertical direction in Fig. 1.

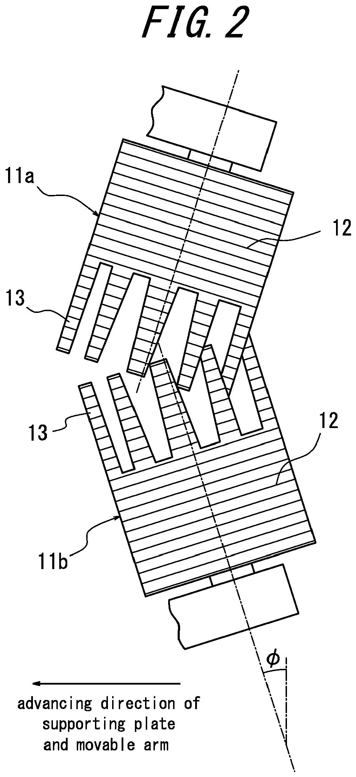

As illustrated in Fig. 2 in an engaged state, each of the drawing rolls 11a, 11a constituting the joint unit 4a on the movable arm side is provided with at least one groove (a plurality of annular grooves 12 in this embodiment) extending in a circumferential direction on the cylindrical outer circumferential surface and a plurality of teeth 13 protruding along directions of the rotational axes of the drawing rolls indicated by chain lines in Fig. 2 at the circumferential edges facing the adjacent drawing roll.

As illustrated in Fig. 2, the drawing rolls 11a, 11b of the joint unit 4a are arranged such that teeth 13 of one drawing roll engage with the teeth 13 of the other drawing roll. As a result, the two drawing rolls 11a, 11a of the joint unit 4a can rotate synchronously.

In a plane parallel to the surfaces of the sheet members arranged on the supporting plate, each of the two drawing rolls 11a, 11a engaging with each other is arranged to have a posture that the rotational axis thereof is tilted at a predetermined angle φ with respect to a direction perpendicular to the advancing direction of the movable arm 3 and the like with the end of the drawing rolls on the side of the of teeth 13 facing in the advancing direction. The angle φ may be, for example, between 15 degrees and 25 degrees.

The two drawing rolls 11c, 11d constituting the joint unit 4b on the supporting plate side are arranged such that teeth thereof engage with each other to rotate synchronously in the same way as the drawing rolls in Fig. 2.

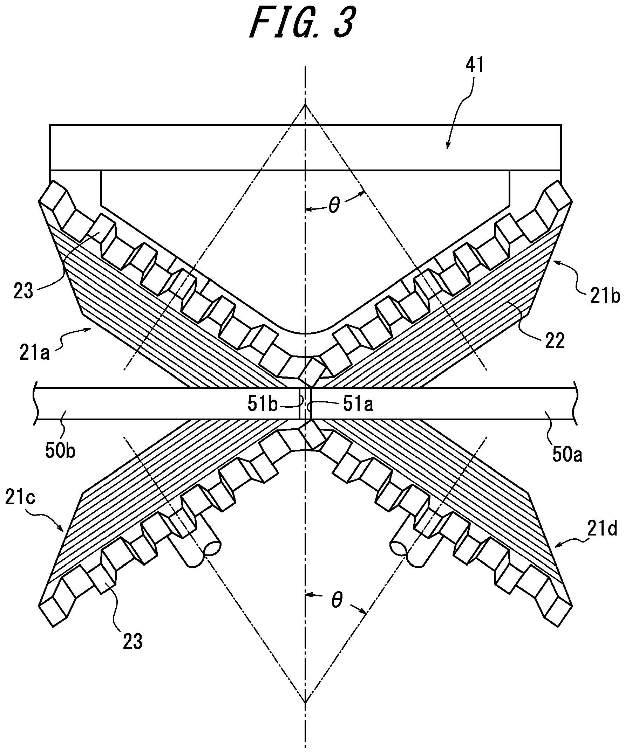

As illustrated in Fig. 3, the gear wheels 21a, 21b constituting the joint unit 4a and the gear wheels 21c, 21d constituting the joint unit 4b have outer circumferential surfaces each formed in a circular truncated cone shape. The circumferential surfaces are provided with, for example, a plurality of annular grooves 22 extending in the circumferential direction of the gear wheels 21a-21d. A plurality of teeth 23 protruding radially are formed at enlarged diameter ends in the direction of the rotational axes indicated by chain lines in Fig. 3 over the entire circumference.

As illustrated in Fig. 3, the two gear wheels of the joint unit 4a are arranged such that rotational axes of the gear wheels are tilted at a predetermined angle θ with respect to a line perpendicular to the surfaces of sheet members 50a, 50b in a direction that reduced diameter ends spaced from each other. As a result, the teeth 23 engage with each other to allow synchronous rotations thereof. The same applies to features of the two gear wheels of joint unit 4b.

The tilt angle θ of the rotational axes may be, for example, between 20 degrees and 30 degrees.

The gear wheels 21a, 21b at the movable arm side and the gear wheels 21c, 21 d at the supporting plate side are arranged to engage with each other at the side of the supporting plate 2 on which a rubber sheet is placed (i.e. the face of the supporting plate 2 opposite to the movable arm 3) in a state where the sheet members 50a, 50b are not provided. As a result, the gear wheels 21a-21d can apply sufficient forces against the surfaces of the sheet members 50a, 50b in directions perpendicular to the surfaces without any displacement of the sheet members 50a, 50b in the directions perpendicular to the surfaces, thereby bringing the sheet members 50a, 50b into butt contact with each other.

Although not illustrated, the grooves formed on the outer circumferential surfaces of the drawing roll and the gear wheel may be one or more spiral grooves extending in the circumferential direction thereof in place of the above annular grooves.

In a section taken along the rotational axis, the outer circumferential surfaces of the drawing roll and the gear wheel may be formed in, for example, a jagged shape by forming a groove such as the above annular groove 12, 22.

In the present invention, as illustrated in Fig. 1, the drawing rolls 11a-11d and the gear wheels 21a-21d are attached to the movable arm 3 and supporting plate 2 such that the drawing rolls 11a, 11b constituting the joint unit 4a at the movable arm side and the drawing rolls 11c, 11d constituting the joint unit 4b at the supporting plate side are located ahead (to the left in Fig. 1) of the gear wheels 21a and 21b, 21c and 21d, respectively, in the advancing directions of the movable arm 3 and the supporting plate 2.

According to the apparatus 1 of this embodiment, in a state where the edges of the two sheet members to be joined are arranged between the pair of joint units 4a, 4b, and more specifically between the drawing rolls 11a, 11b and the gear wheels 21a, 21b of the joint unit 4a at the movable arm side, and the drawing rolls 11c, 11d and the gear wheels 21c, 21d, respectively, the movable arm 3 approaches the supporting plate 2; the edges of the sheet members are sandwiched between the joint units 4a, 4b; and, the movable arm 3 and the supporting plate 2 are moved along the edge faces of the sheet members in a direction indicated by a arrow in Fig. 1 while the edges are maintained to be sandwiched between the joint units. As a result, the drawing rolls 11a-11d and the gear wheels 21 a-21 d rotationally move on both sides of the edges of the sheet members to butt joint the edge faces of the sheet members.

In addition, in the apparatus 1, the drawing rolls 11a-11d are arranged ahead in the advancing direction of the supporting plate or the like, and the gear wheels 21a-21d are arranged behind in the advancing direction, so that the drawing rolls 11a-11d and the gear wheels 21a-21d work in the following manner when the edge faces of the sheet members are butt joined.

As illustrated in Fig. 2, in the section parallel to the surfaces of the sheet members arranged on the supporting plate 2, the rotational axes of the drawing rolls 11a-11d of the joint units 4a, 4b are tilted at the predetermined angle θ with respect to the direction perpendicular to the advancing direction of the movable arm 3 and the like with the ends of the drawing rolls 11a-11d at the teeth 13 side facing in the advancing direction of the movable arm 3 and the like. The outer circumferential surfaces of the drawing rolls 11a-11d provided with the annular grooves 12 dig into both of the upper and lower surfaces of the ends of the sheet members sandwiched between the drawing rolls 11a, 11b, and the drawing rolls 11c, 11d.

As a result, when the supporting plate 2 and the movable arm 3 are moved in one side in the direction (indicated by the arrow in Fig. 1) in which the movable arm 3 extends with the sheet members being sandwiched between the drawing rolls 11a, 11b at the movable arm side and the drawing rolls 11c, 11d at the supporting plate side, a force toward engaging portions of the two drawing rolls is applied to the ends of the sheet members on which the drawing rolls 11a-11d rotationally move, and the edges of the two sheet members are brought closer together.

As stated above, immediately after the ends of the sheet members are brought closer together by the drawing rolls 11a, 11b, 11c and 11d, the ends of the sheet members are sandwiched between the two gear wheels 21a, 21b at the movable arm side and the two gear wheels 21c, 21 d at the supporting plate side.

The two gear wheels 21a, 21b at the supporting arm side engage with each other and rotate in the opposite directions. The differences in the circumferential velocities between the enlarged diameter ends and the reduced diameter ends of the gear wheels 21a, 21b bring the ends of the sheet members contacting with the outer circumferential faces of the gear wheels 21a, 21b provided with the annular grooves 22 further closer together on the upper face sides. The gear wheels 21c, 21 d engaging with each other at the supporting plate side similarly bring the edges of the sheet members further closer together on the lower face side. Then, the edge faces of the sheet members are press bonded.

As stated above, the gear wheels 21 a, 21 b at the moving arm side and the gear wheels 21c, 21 d at the supporting plate side are arranged such that they engage with each other at the side of the supporting plate 2 on which the rubber sheet is placed (i.e. the side of the supporting plate 2 faces to the movable arm 3) when the sheet members 50a, 50b are not arranged. As a result, the gear wheels 21 a, 21b and the gear wheels 21c, 21 d press the sheet members 50a, 50b with a sufficient force in both directions perpendicular to the surface of the sheet members 50a, 50b without any displacement in the direction perpendicular to the surface, thereby bringing the sheet members into butt contact with each other.

The apparatus 1 illustrated in Fig. 1 has connecting members 31, 41 and coil springs 32, 42. The connecting members 31, 41 are interposed between the drawing rolls 11a, 11b and the gear wheels 21a, 21b at the movable arm 3 side and the movable arm 3. The connecting members 31, 41 are hingedly connected to the movable arm 3. The coil springs 32, 42 are arranged on the movable arm 3 and bias the drawing rolls 11a, 11b and gear wheels 21a, 21b, and more specifically the connecting members 31, 41 in a state where the sheet members are sandwiched between the pair of the joint units 4a, 4b. This configuration can adjust the pressing forces on the sheet members applied by the drawing rolls 11a, 11b and the gear wheels 21a, 21b as desired regardless of the position of the movable arm 3 relative to the supporting plate 2. The pressing forces on the sheet members applied by the drawing rolls 11a, 11 and the gear wheels 21a, 21c as well as by the drawing rolls 11b, 11d and the gear wheels 21b, 21d may be, for example, between 30 N and 40N.

According to the present invention, the sheet members are butt joined by the rotations of the drawing rolls 11a-11d and the gear wheels 21a-21d rolling on the upper sides and the lower sides of the sheet members, so that it is possible to certainly bring the edges of the two sheet members closer together and to firmly butt join the edge faces of the sheet members.

In the embodiment shown in Fig. 1, a grip portion 5 to be held by an operator is arranged at a left end of the movable arm 3 and the supporting plate 2.

The grip portion 5 consists of a rod lever 5a and a hand grip 5b. The lever 5a is hingedly connected to one end of the movable arm 3 in a direction in which the movable arm 3 extends, and is manually manipulated by an operator. The hand grip 5b is connected to an end of the supporting plate 2 at the lever 5a side by, for example, a bolt. The hand grip 5b extends from the connecting part toward the lever 5a, bents at a right angle, and extends parallel to the lever 5a.

In the apparatus shown in Fig. 1, a link mechanism is formed between the supporting plate 2 and the movable arm 3, and the grip portion 5 by hingedly connecting the hand grip 5b to the movable arm 3 at the bending part; and providing a link 7b hingedly connected to and joining together the lever 5a and the hand grip 5b at a position adjacent to the hingedly connecting portion of the bending part where the lever 5a and the hand grip 5b extend parallel to each other .

An action of the movable arm 3 by means of such a link mechanism during a manipulation of the lever 5a by the operator is described below in detail.

The illustrated link mechanism consists of links 7a -7d in which the link 7a is disposed between a hinge connecting part 6a where the lever 5a and the link 7b are hingedly connected and a hinge connecting part 6d where the lever 5a and the movable arm 3 are hingedly connected; the link 7b is connected with the levers 5a, 5b at the hinge connecting parts 6a, 6b, respectively; the link 7c is disposed between the hinge connecting part 6b where the hand grip 5b and link 7b are hingedly connected and the hinge connecting part 6c where the hand grip 5b and the movable arm 3 are hingedly connected; the link 7d is disposed between the hinge connecting part 6c where the movable art 3 and the hand grip 5b are hingedly connected and the hinge connecting part 6d where the movable arm 3 and the lever 5a are hingedly connected.

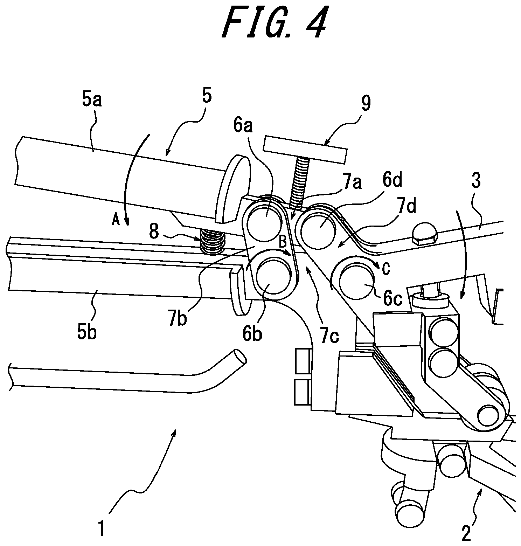

As illustrated in Fig. 4, when the operator does not manipulate the lever 5a, the biasing force of a spring 8 interposed between the hand grip 5b and the lever 5a allows the lever 5a to gradually separate from the hand grip 5b toward an left end of the lever 5a, and the movable arm 3 to separate from the supporting plate 2.

Then, when the operator grips the grip portion 5 to bring the lever 5a to approach to the hand grip 5b in a direction indicated by an arrow A in Fig. 4, the links 7b, 7d connected to the hand grip 5b rotate around the hinge connecting parts 6b, 6c in directions indicated by arrows B, C in Fig. 4, respectively. As a result, the link 7a is displaced in a direction parallel to the link 7c, and thus the movable arm 3 integrated with the link 7d rotates around the hinge connecting part 6c to approach the supporting plate 2 as illustrated in Fig. 1.

When the operator relieves a force for gripping the grip portion 5 from a state as shown in Fig. 1, the biasing force of the contracted spring 8 sandwiched between the hand grip 5b and the lever 5a against the lever 5a rotates the links 7b, 7d around the hinge connecting parts 6b, 6c in a directions opposite to the direction indicated by the arrows B, C in Fig. 4, respectively, and the movable arm 3 separates from the supporting plate 2 as illustrated in Fig. 4.

In the apparatus 1 operated as stated above, the edges of the two sheet members to be joined are arranged between the pair of joint units 4a, 4b, and the operator grips the grip portion 5 and manipulates the lever 5a, so that the movable arm 3 approaches to the supporting plate 2 as stated above and the edges of the sheet members are sandwiched between the pair of joint units 4a, 4b. Then, the operator keeps gripping the hand grips 5 and moves the supporting plate 2 and the movable arm 3 along the edge faces of the sheet members toward one side in the direction in which the supporting plate 2 extends (i.e. to the left in Fig. 1), so that the apparatus can butt join the two sheet members by the function of the pair of the joint units 4a, 4b to join the edge faces of the sheet members as stated above. In this way, the operation of the apparatus becomes remarkably easier, which can greatly improve the productivity of the butt joint , for example, on a conveyer of a conventional apparatus for joint the edge faces or on a work station where spare sheet members are joined during the subsequent process.

When rollers 10 traveling on the work station or the conveyer for implementing the butt joint on the workstation or the conveyer as shown in Fig. 1 are provided on the lower side of the supporting plate 2 opposite to the upper side thereof on which the sheet members are placed, the displacements of the supporting plate 2 and the movable arm 3 along the edge faces of the sheet members upon butt joining the edge faces of the sheet members can be sufficiently smooth.

In the apparatus 1 in Fig. 1, it is possible to maintain a state that the lever 5a and the hand grip 5b are close to each other and eventually a state that the sheet members are sandwiched between the pair of the joint units 4a, 4b by tightening a holding screw 9 provided on the link 7a of the lever 5a while the operator brings the lever 5a and the hand grip 5b closer together. As a result, the productivity of the butt joint of the sheet members can be remarkably improved.

When the above apparatus 1 is used to butt join the edge faces of the sheet members, the butt joint of the edge faces preferably is initiated at the intermediate area of the edge faces of the sheet members in the width direction of the sheet member. More specifically, the supporting plate 2 and the movable arm 3 are displaced from a starting position of the joint in the intermediate areas toward one side of the sheet member to allow a part of the edge faces of the sheet members to be joined, and then the supporting plate 2 and the movable arm 3 are displaced from the starting position of the joint toward the other side of the sheet member to allow the rest of the edge faces of the sheet members to be joined.

According the above method, when a part of the edge faces of the sheet members between the starting position of the joint and the one side of the sheet member is to be joined, the sheet members can be secured by, for example, the operator holding the edges of the other sides of the sheet members. As a result, it is possible to prevent a positional misalignment of the sheet members caused by the displacements of the sheet members due to the movement of the movable art and the like during the butt joint of a part of the edge faces of the sheet members. Accordingly, the above butt joint apparatus can further facilitate and endure the butt joint operation of the edge face of the sheet member.

The invention may be applied to not only the above manually-operated apparatus for butt joining the sheet members but also an automated apparatus for butt joining (not shown) which automatically performs an operation that sandwiches the sheet members between the pair of joint units, or an operation that moves the movable arm and the supporting plate with the sheet members being sandwiched.

In other words, the sheet members to be joined are arranged between the pair of joint units, and an air cylinder or the like actuated by a motor bring the movable arm to approach to the supporting plate to sandwich the sheet member. Then, the movable arm and the supporting plate are displaced, for example, on a guide rail connected to the movable arm while maintaining the posture of the movable arm, to, thereby, join the sheet members.

### Example

An apparatus for butt joining according the present invention was prototyped and was used to butt join edge faces of sheet members consisting of cords coated with unvulcanized rubber. The joint strength of the joint face thus obtained is evaluated in the following manner.

It is noted that, similar to a conventional apparatus for butt joining edge faces, a tensile test is performed on the joined sheet members, and the evaluation standard is that the joined faces have strength sufficiently large enough to prevent them from being torn off even under a state that the distance between the centers of two cords adjacent the respective joined faces are elongated to 400 percent of its original distance.

The sheet members butt joined by the apparatus shown in Fig. 1 were subjected to the above test, resulting that the joined faces were not torn off. Accordingly, it was confirmed that the apparatus according to the present invention can butt join edge faces of sheet members with sufficient joint strength.

### REFERENCE SIGNS LIST

- 1:: Apparatus for butt joining
- 2:: Supporting plate
- 3:: Movable arm
- 4a, 4b:: Joint unit
- 5:: Grip portion
- 5a:: Lever
- 5b:: Hand grip
- 6a-6d:: Hinge connecting part
- 7a-7d:: Link
- 8:: Spring
- 9:: Holding screw
- 10:: Roller
- 11a-11d:: Drawing roll
- 12:: Annular groove
- 13:: Tooth
- 21a-21d:: Gear wheel
- 22:: Annular groove
- 23:: Tooth
- 31, 41:: Connecting member
- 32, 42:: Coil spring
- 50a, 50b:: Sheet member
- 51a, 51b:: Edge face of sheet member
- φ:: Angle between drawing rolls engaging with each other
- θ:: Tilt angle of gear wheel

## Claims

1. An apparatus (1) for butt joining two sheet members (50a, 50b) comprising:
a supporting plate (2);
a movable arm (3) spaced from the supporting plate (2) by a predetermined distance and being capable of moving toward or away from the supporting plate (2); and
a pair of opposed joint units (4a, 4b) arranged at the supporting plate (2) and the movable arm (3), respectively,
each of the pair of joint units (4a, 4b) being provided with two gear wheels (21a, 21b, 21c and 21d) and two drawing rolls (11a-d) aligned in a direction in which the movable arm (3) extends,
each gear wheel (21a-d) having a circular truncated cone shape and at least one groove (22) extending in a circumferential direction on the outer circumferential surface of the gear wheel (21a-d), each pair of the two gear wheels (21 a, 21b, 21c and 21d) on each joint unit (4a, 4b) being capable of rotating synchronously,
each drawing roll (11a-d) having a cylindrical shape, each pair of the two drawing rolls (11a-d) on each joint unit (4a, 4b) being capable of rotating synchronously,
the supporting plate (2) and the movable arm (3) being moved toward one side in a longitudinal direction of the movable arm (3) with respective edges of the two sheet members (50a, 50b) to be joined being sandwiched between the pair of joint units (4a, 4b) to bring the edges closer together and butt join edge faces (51a, 51b) of the sheet members (50a, 50b),
wherein the drawing rolls (11a-d) of the movable arm (3) are arranged ahead in an advancing direction of the supporting plate (2) and the movable arm (3), and the gear wheels (21a-d) of the movable arm (3) are arranged behind in the advancing direction,
**characterized in that**:
each drawing roll (11a-d) has at least one groove (12) extending in a circumferential direction on the outer circumferential surface of the drawing roll (11a-d); and
the drawing rolls (11a-d) of the supporting plate (2) are arranged ahead in an advancing direction of the supporting plate (2) and the movable arm (3), and the gear wheels (21a-d) of the supporting plate (2) are arranged behind in the advancing direction.

2. The apparatus (1) for butt joining two sheet members (50a, 50b) according to claim 1, further comprising a grip portion (5) to be held by an operator, the grip portion (5) consisting of a lever (5a) coupled to one end of the movable arm (3) in the direction in which movable arm (3) extends and a hand grip (5b) attached to an end of the supporting plate (2) on the lever side,
wherein a link mechanism is formed between the grip portion (5), and the supporting plate (2) and the movable arm (3), the link mechanism moving the movable arm (3) toward or away from the supporting plate (2) through manual manipulation of the lever (5a) by the operator.

3. A method for using the apparatus (1) for butt joining two sheet members (50a, 50b) of claim 1 or claim 2 to butt join opposed edge faces (51a, 51b) of two sheet members (50a, 50b) with each other, the method comprising the steps of:
moving the supporting plate (2) and the movable arm (3) toward one side in a longitudinal direction of the movable arm (3) with respective edges of the two sheet members (50a, 50b) being sandwiched between the pair of joint units (4a, 4b) to rotationally displace each drawing roll (11a-d) and each gear wheel (21a-d) of the joint units (4a, 4b) on the edges of the sheet members (50a, 50b);
bringing the edges of the sheet members (50a, 50b) closer together by means of the drawing rolls (11a-d) arranged ahead in an advancing direction of the supporting plate (2) and the movable arm (3); and
press bonding the edge faces (51a, 51b) of the sheet members (50a, 50b) with each other with the gear wheels (21 a-d) arranged behind in the advancing directions.

4. The method for using the apparatus (1) for butt joining two sheet members (50a, 50b) according to claim 3, further comprising the steps of:
initiating the butt joint of the edge faces (51a, 51b) at an intermediate area of the edge face (51a, 51b) of the sheet member in a width direction of the sheet member, and moving the supporting plate (2) and the movable arm (3) from a starting position of the joint toward one side of the sheet member to allow a part of the edge faces (51a, 51b) of the sheet members (50a, 50b) to be joined; and
subsequently moving the supporting plate (2) and the movable arm (3) from the starting position of joint toward the other sides of the sheet members (50a, 50b) to join the rest of the edge faces (51a, 51b) of the sheet members.

## Patentansprüche

1. Vorrichtung (1) zum Stoßverbinden zweier Blattelemente (50a, 50b), umfassend:
eine Tragplatte (2);
einen beweglichen Arm (3), der von der Tragplatte (2) in einem vorbestimmten Abstand entfernt ist und sich zu und weg von der Tragplatte (2) bewegen kann; und
ein Paar entgegengesetzter Verbindungseinheiten (4a, 4b), welche jeweils auf der Tragplatte (2) und dem beweglichen Arm (3) angeordnet sind,
wobei jede des Paares von den entgegengesetzten Verbindungseinheiten (4a, 4b) zwei Getrieberäder (21a, 21b, 21c und 21d) und zwei Zugwalzen (11a-d) aufweist, welche in einer Richtung ausgerichtet sind, in welcher sich der bewegliche Arm (3) erstreckt,
wobei jedes Getrieberad (21a-d) eine kreisförmige kegelstumpfförmige Gestalt hat und zumindest eine Rille (22) aufweist, welche sich in einer Umfangsrichtung auf der äußeren Umfangsfläche des Getrieberads (21a-d) erstreckt, wobei jedes Paar der zwei Getrieberäder (21a, 21b, 21c und 21d) auf jeder Verbindungseinheit (4a, 4b) synchron drehbar ist,
wobei jede Zugwalze (11a-d) eine zylindrische Form hat, und jedes Paar von den zwei Zugrollen (11a-d) auf jeder Verbindungseinheit (4a, 4b) synchron drehbar ist,
wobei die Tragplatte (2) und der bewegliche Arm (3) zu einer Seite in einer Längsrichtung des beweglichen Arms (3) bewegt werden, wobei entsprechende Ränder der zwei zu verbindende Blattelemente (50a, 50b) zwischen dem Paar von Verbindungseinheiten (4a, 4b) eingeschlossen sind, um die Ränder näher zueinander zu bringen und zum Stoßverbinden der Randflächen (51a, 51b) der Blattelemente (50a, 50b),
wobei die Zugwalzen (11a-d) des beweglichen Arms (3) in der Vorschubrichtung der Tragplatte (2) und des beweglichen Arms (3) vorgeordnet sind, und die Getrieberäder (21a-d) des beweglichen Arms (3) in der Vorschubrichtung nachgeordnet sind,
**dadurch gekennzeichnet, dass**:
jede Zugwalze (11a-d) zumindest eine Rille (12) aufweist, welche sich in einer Umfangsrichtung auf der äußeren Umfangsfläche der Zugwalze (11a-d) erstreckt; und
die Zugwalzen (11a-d) der Tragplatte (2) in der Vorschubrichtung der Tragplatte (2) und des beweglichen Arms (3) vorgeordnet sind und die Getrieberäder (21a-d) der Tragplatte (2) in der Vorschubrichtung nachgeordnet sind.

2. Vorrichtung (1) zum Stoßverbinden zweier Blattelemente (50a, 50b) nach Anspruch 1, ferner umfassend einen Griffabschnitt (5) zum Halten durch eine Bedienungsperson, wobei der Griffabschnitt (5) aus einem Hebel (5a), welches mit einem Ende des beweglichen Arms (3) in der Erstreckungsrichtung des beweglichen Arms (3) verbunden ist und aus einem Handgriff (5b) besteht, welches an einem Ende der Tragplatte (2) auf der Hebelseite befestigt ist,
wobei zwischen dem Griffabschnitt (5) und der Tragplatte (2) und dem beweglichen Arm (3) ein Gelenkmechanismus gebildet ist, wobei der Gelenkmechanismus den beweglichen Arm (3) zu oder weg von der Tragplatte (2) durch manuelle Betätigung des Hebels (5a) durch die Bedienperson bewegt.

3. Verfahren zum Verwenden der Vorrichtung (1) zum Stoßverbinden zweier Blattelemente (50a, 50b) nach Anspruch 1 oder Anspruch 2, um gegenüberliegende Randflächen (51a, 51b) der zwei Blattelemente (50a, 50b) zueinander auf Stoß zu verbinden, wobei das Verfahren die Schritte umfasst:
Bewegen der Tragplatte (2) und des beweglichen Arms (3) zu einer Seite in einer Längsrichtung des beweglichen Arms (3), wobei entsprechende Ränder der zwei Blattelemente (50a, 50b) zwischen dem Paar von Verbindungseinheiten (4a, 4b) eingeschlossen werden, um jede Zugwalze (11a-d) und jedes Getrieberad (21a-d) der Verbindungseinheiten (4a, 4b) auf den Rändern der Blattelemente (50a, 50b) drehbar zu bewegen;
Annähern der Ränder der Blattelemente (50a, 50b) zueinander mittels der Zugwalzen (11a-d), welche in der Vorschubrichtung der Tragplatte (2) und des beweglichen Arms (3) vorgeordnet sind; und
Druckverbinden der Randflächen (51a, 51b) der Blattelemente (50a, 50b) miteinander, wobei die Getrieberäder (21a-d) in der Vorschubrichtung nachgeordnet sind.

4. Verfahren zum Verwenden der Vorrichtung (1) zum Stoßverbinden zweier Blattelemente (50a, 50b) nach Anspruch 3, ferner umfassend die Schritte:
Einleiten der Stoßverbindung der Randflächen (51a, 51b) in einem Zwischenbereich der Randfläche (51a, 51b) des Blattelements in einer Breitenrichtung des Blattelements, und Bewegen der Tragplatte (2) und des beweglichen Arms (3) aus einer Startposition der Verbindung zu einer Seite des Blattelements, um die Verbindung eines Teils der Randflächen (51a, 51b) der Blattelemente (50a, 50b) zu ermöglichen; und
darauffolgendes Bewegen der Tragplatte (2) und des beweglichen Arms (3) aus der Startposition der Verbindung zu den anderen Seiten der Blattelemente (50a, 50b) um den Rest der Randflächen (51a, 51b) der Blattelemente zu verbinden.

## Revendications

1. Appareil (1) pour assembler bout à bout deux éléments de feuille (50a, 50b), comprenant :
une plaque de support (2) ;
un bras mobile (3) espacé de la plaque de support (2) d'une distance prédéterminée et capable de se déplacer vers la plaque de support (2) ou à l'écart de celle-ci ; et
une paire d'unités d'articulation opposées (4a, 4b) agencées respectivement au niveau de la plaque de support (2) et du bras mobile (3) ;
chacune de la paire d'unités d'articulation opposées (4a, 4b) comportant deux roues d'engrenage (21a, 21b, 21c, et 21d) et deux rouleaux d'étirage (11a-d) alignés dans une direction d'extension du bras mobile (3) ;
chaque roue d'engrenage (21a-d) ayant une forme en tronc de cône circulaire et comportant au moins une rainure (22) s'étendant dans une direction circonférentielle sur la surface circonférentielle externe de la roue d'engrenage (21a-d), chaque paire des deux roues d'engrenage (21a, 21b, 21c et 21d) sur chaque unité d'articulation (4a, 4b) étant capable de tourner de manière synchronisée ;
chaque rouleau d'étirage (11a-d) ayant une forme cylindrique, chaque paire des deux rouleaux d'étirage (11a-d) sur chaque unité d'articulation (4a, 4b) étant capable de tourner de manière synchronisée ;
la plaque de support (2) et le bras mobile (3) étant déplacés vers un côté dans une direction longitudinale du bras mobile (3), les bords respectifs des deux éléments de feuille (50a, 50b) devant être assemblés étant pris en sandwich entre la paire d'unités d'articulation (4a, 4b) pour rapprocher davantage les bords et assembler bout à bout les faces de bordure (51a, 5b) des éléments de feuille (50a, 50b) ;
dans lequel les rouleaux d'étirage (11a-d) du bras mobile (3) sont agencés en avant dans une direction d'avancement de la plaque de support (2) et du bras mobile (3), les roues d'engrenage (21a-d) du bras mobile (3) étant agencées en arrière dans la direction d'avancement ;
**caractérisé en ce que** :
chaque rouleau d'étirage (11a-d) comporte au moins une rainure (12) s'étendant dans une direction circonférentielle sur la surface circonférentielle externe du rouleau d'étirage (11a-d) ; et
les rouleaux d'étirage (11a-d) de la plaque de support (2) sont agencés en avant dans une direction d'avancement de la plaque de support (2) et du bras mobile (3), les roues d'engrenage (21a-d) de la plaque de support (2) étant agencées en arrière dans la direction d'avancement.

2. Appareil (1) pour assembler bout à bout deux éléments de feuille (50a, 50b) selon la revendication 1, comprenant en outre une partie de préhension (5) devant être tenue par un opérateur, la partie de préhension (5) consistant en un levier (5a) accouplé à une extrémité du bras mobile (3), dans la direction d'extension du bras mobile (3), et une poignée (5b) fixée sur une extrémité de la plaque de support (2) sur le côté du levier ;
dans lequel un mécanise de liaison est formé entre la partie de préhension (5) et la plaque de support (2) et le bras mobile (3), le mécanisme de liaison déplaçant le bras mobile (3) vers la plaque de support (2) ou à l'écart de celle-ci par l'intermédiaire d'une manipulation manuelle du levier (5a) par l'opérateur.

3. Procédé d'utilisation de l'appareil (1) pour assembler bout à bout deux éléments de feuille (50a, 50b) selon les revendications 1 ou 2, pour assembler bout à bout des faces de bordure opposées (51a, 51b) de deux éléments de feuille (50a, 50b) les unes avec les autres, le procédé comprenant les étapes ci-dessous :
déplacement de la plaque de support (2) et du bras mobile (3) vers un côté dans une direction longitudinale du bras mobile (3), les bords respectifs des deux éléments de feuille (50a, 50b) étant pris en sandwich entre la paire d'unités d'articulation (4a, 4b), pour déplacer de manière rotative chaque rouleau d'étirage (11a-d) et chaque roue d'engrenage (21a-d) des unités d'articulation (4a, 4b) sur les bords des éléments de feuille (50a, 50b) ;
rapprochement des bords des éléments de feuille (50a, 50b) par l'intermédiaire des rouleaux d'étirage (11a-d) agencés en avant dans une direction d'avancement de la plaque de support (2) et du bras mobile (3) ; et
liaison par pressage des faces de bordure (51a, 51b) des éléments de feuille (50a, 50b) les unes avec les autres, les roues d'engrenage (21a-d) étant agencées en arrière dans les directions d'avancement.

4. Procédé d'utilisation de l'appareil (1) pour assembler bout à bout deux éléments de feuille (50a, 50b) selon la revendication 3, comprenant en outre les étapes ci-dessous :
initialisation de l'assemblage bout à bout des faces de bordure (51a, 51b) au niveau d'une région intermédiaire de la face de bordure (51a, 51b) de l'élément de feuille, dans une direction de la largeur de l'élément de feuille, et déplacement de la plaque de support (2) et du bras mobile (3) d'une position de départ de l'assemblage vers un côté de l'élément de feuille, pour permettre l'assemblage d'une partie des faces de bordure (51a, 51b) des éléments de feuille (50a, 50b) ; et
déplacement ensuite de la plaque de support (2) et du bras mobile (3) de la position de départ de l'assemblage vers les autres côtés des éléments de feuille (50a, 50b) pour assembler la partie restante des faces de bordure (51a, 51b) des éléments de feuille.
